# EUROPEAN PATENT APPLICATION

(11) **EP 2 221 240 A1**
(43) Date of publication of application: **25.08.2010**
(21) Application number: 09172988.9
(22) Date of filing: 14.10.2009
(51) Int. Cl.: B62D 55/084

(54) **Undercarriage**

(30) Priority: 15.10.2008 IT BO20080635
(71) Applicant: Sampierana S.P.A., 47026 San Piero in Bagno (IT)
(72) Inventor: Mosconi, Angelo, 47026, San Piero in Bagno (Forli'-Cesena) (IT); Para, Moreno, 47026, San Piero in Bagno (Forli'-Cesena) (IT)
(74) Representative: Fanzini, Valeriano

(57) **Abstract**

An undercarriage (10) with variable track gauge comprises a main frame (12) and a first and second opposite sub-frames (18, 20). The main frame (12) comprises at least one housing (26, 28) for slidably accommodating a respective beam element (36, 38) connected to the respoective sub-frame (18, 20). Means (42, 44) are provided for moving the respective beam element (36, 38) between a first position, defining a reduced track gauge of the undercarriage, and a second position, defining an extended track gauge of the undercarriage. Inside the housing (26, 28) and associated with the respective beam element (36, 38), means (46, 50) acting in conjunction are also provided to stop the sliding of the respective beam element (36, 38) inside its housing (26, 28), in the extended track gauge position. At the bottom surfaces (26a, 28a) of the respective housings (26, 28) means (46) are provided for stopping the sliding movement of the beam elements (36, 38) in the extended track gauge condition, and means (29a), separate from the stop means in the housing, are provided for defining a reaction that opposes the stress created by the beam elements (36, 38) in the extended track gauge condition.

## Description

This invention relates to an undercarriage.

Known in the prior art are undercarriages with variable gauge, in particular for construction machinery, comprising a main frame and first and second opposite sub-frames for supporting respective means for undercarriage locomotion. Each sub-frame is located on one side of the main frame and has respective housings for slidably accommodating a beam element connected to it.

Prior art undercarriages also comprise means for moving the respective beam element between at least a first position, defining a reduced track gauge of the undercarriage, where each sub-frame is close to the respective side and each beam element is retracted inside its housing, and a second position, defining a widened track gauge of the undercarriage, where each sub-frame is away from the respective side and each beam element extends outside its housing.

Prior art undercarriages with variable track gauge also comprise inclined surfaces acting in conjunction with each other to form means for stopping the in or out sliding movement of the beam elements, these inclined surfaces being provided at the housing and at the sub-frame mounting beam, respectively.

In particular, in the extended track gauge position, where the beam element is fully extended outside its housing, the means for stopping the sliding movement in the housing are designed to provide a considerable force for pushing the beam element against the opposing top surface of the housing, where the bottom of the beam element rests its inclined surface directly on the inclined surface of the stopping and lifting wedge provided in the respective housing.

Under these extended track gauge working conditions, the stopping wedge inside the housing is subjected to high stress from the respective beam element to oppose the bending action applied by the beam element.

That means the wedges for stopping the extension of the respective beam elements, or retraction rams, must be extremely strong and large and thus not only cumbersome but also excessively heavy. That in turn requires abundant quantities of material and undercarriage production processes which include complex and problematic steps for the personnel involved, making undercarriage manufacturing times excessively lengthy.

Further, since the retraction ram or beam element has a certain amount of play in its housing, movement from the reduced track gauge condition to the extended track gauge causes unwanted juddering that creates excessive stress on the machine structure and is a nuisance for machine operators.

The juddering may also have unwanted consequences on the work being done by the equipment mounted on an undercarriage of this type.

This invention accordingly provides an undercarriage comprising a main frame and a first and second opposite sub-frames, each for supporting undercarriage movement means, where the main frame has at least one housing for slidably accommodating a respective beam element that mounts the respective sub-frame, means also being provided for moving the beam element between at least one first position defining a reduced track gauge of the undercarriage, and a second position defining an extended track gauge of the undercarriage; the undercarriage being **characterized in that** the bottom surfaces of the respective housings afford means for stopping the sliding movement of the beam elements in the extended track gauge condition, and means, separate from the stop means in the housing, for defining a reaction that opposes the stress created by the beam elements in the extended track gauge condition.

That way, the means for stopping the sliding movement of the beam elements can be made in a conveniently reduced size and adapted solely to apply an action of stopping the sliding movement and clamping the retraction ram against the opposite face of the respective housing.

Assembling the undercarriage is thus facilitated, with the obvious advantage of reducing undercarriage production times.

These and other technical characteristics of the invention are clearly described in the appended claims and the advantages of the invention are apparent from the detailed description which follows, with reference to the accompanying drawings which illustrate a preferred non-limiting embodiment of it provided purely by way of example, and in which:
- Figure 1 is a perspective view of a preferred embodiment of the undercarriage according to this invention;
- Figure 2 is a top view, with some parts in dashed lines, of the preferred embodiment of the undercarriage according to the invention;
- Figure 3 is a perspective view showing only the main frame of the preferred embodiment of the undercarriage according to the invention;
- Figure 4 is a perspective view of a detail of the sub-frame with corresponding supporting beam elements in the preferred embodiment of the undercarriage according to the invention;
- Figure 5A is a cross section of the undercarriage according to the invention in a reduced track gauge condition;
- Figure 5B is an enlarged detail from Figure 5A;
- Figure 6A is a cross section, similar to that of Figure 5A, showing the undercarriage according to the invention in an extended track gauge condition;
- Figure 6B is an enlarged detail from Figure 6A;
- Figure 7 is an exploded view showing in particular the clamping block for stopping the sliding of the retraction ram according to this preferred embodiment;
- Figure 8 is a perspective view from above showing the clamping block or retraction ram limit stop according to this preferred embodiment;
- Figure 9 is a longitudinal section along the centre line of the stop block;
- Figure 10 is a longitudinal section through a hole for the passage of the means for fastening the stop block according to this preferred embodiment;
- Figure 11 is a cross section of a housing for the upper movable engagement means of this preferred embodiment of the undercarriage;

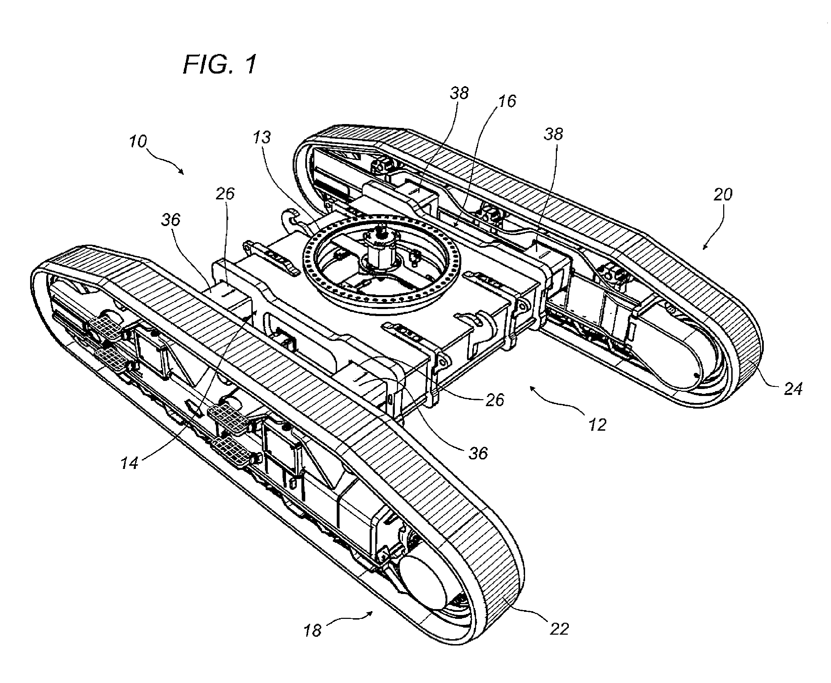

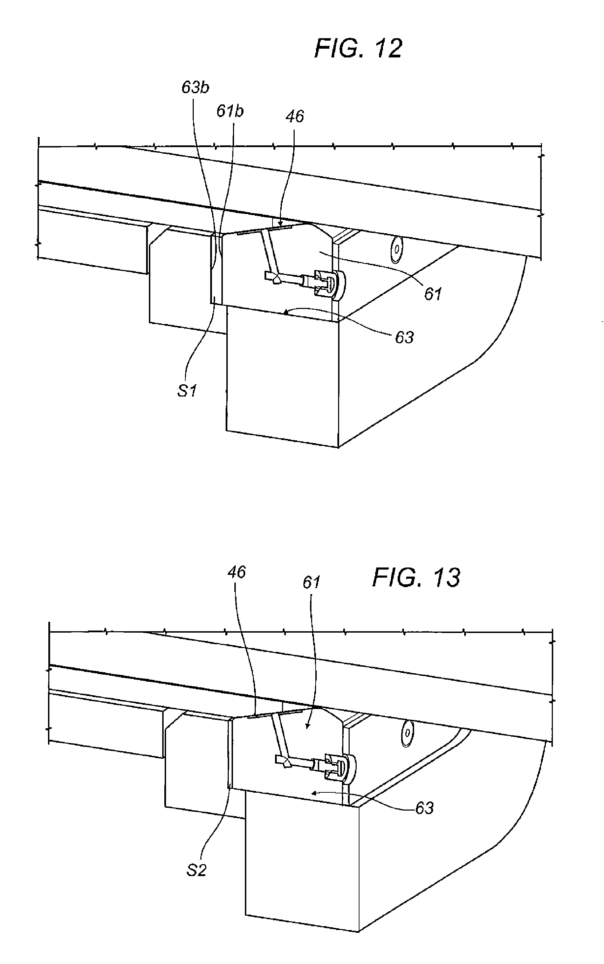

- Figures 12 and 13 are perspective detail views showing the zone of the clamping or stopping block, provided with different shims for adjusting the longitudinal position of the stopping block itself. With reference to Figure 1, a preferred embodiment 10 of the variable track gauge undercarriage comprises a main frame 12 which centrally mounts a rack 13 for connecting the top part of the machine equipped with this undercarriage, the main frame 12 defining a first and a second longitudinal side 14, 16, opposite each other, where it is associated with a first and a second sub-frame 18, 20, each for supporting respective undercarriage movement means in the form of respective endless tracks 22, 24 trained around and slidable on suitable rollers mounted on the respective sub-frame 18, 20 of the undercarriage.

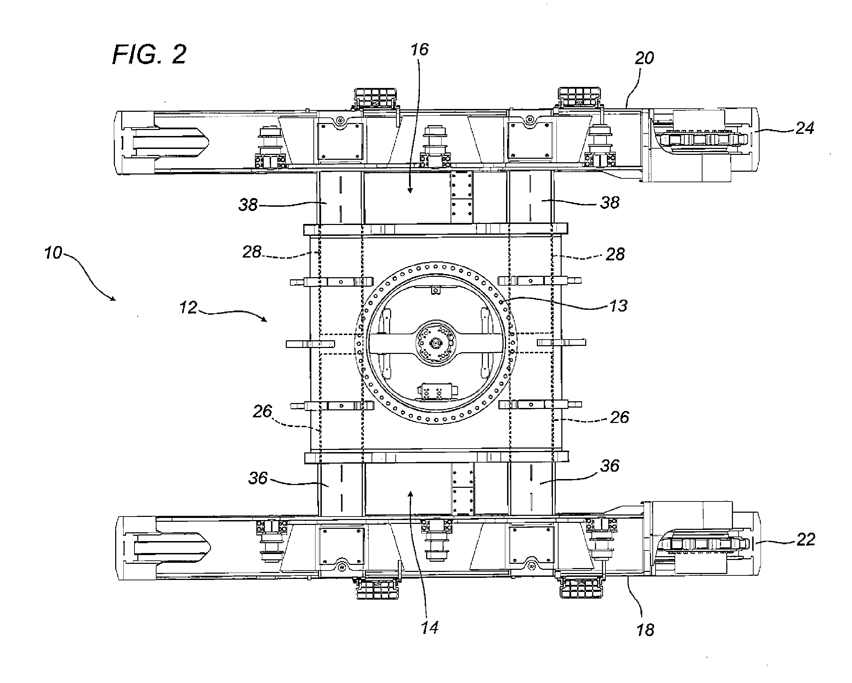

As shown in Figure 1, at each of the first and second sides of it 14, 16, the main frame 12 has respective first and second housings 26, 26 and 28, 28 (shown in dashed lines in Figure 2) for slidably accommodating respective first and second beam elements, or retraction rams 36, 36 and 38, 38 extending at and supporting the respective track carrier sub-frame 18, 20.

As illustrated, the first and second housings 26, 26 and 28, 28 of the respective sides 14, 16, and the first and second beam elements 36, 36 and 38, 38 inside them are longitudinally spaced from each other.

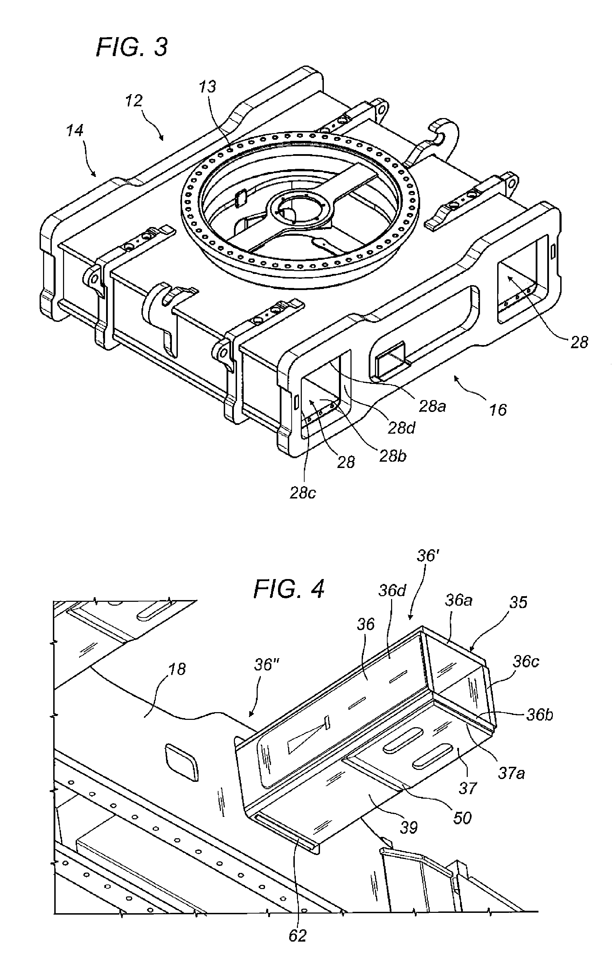

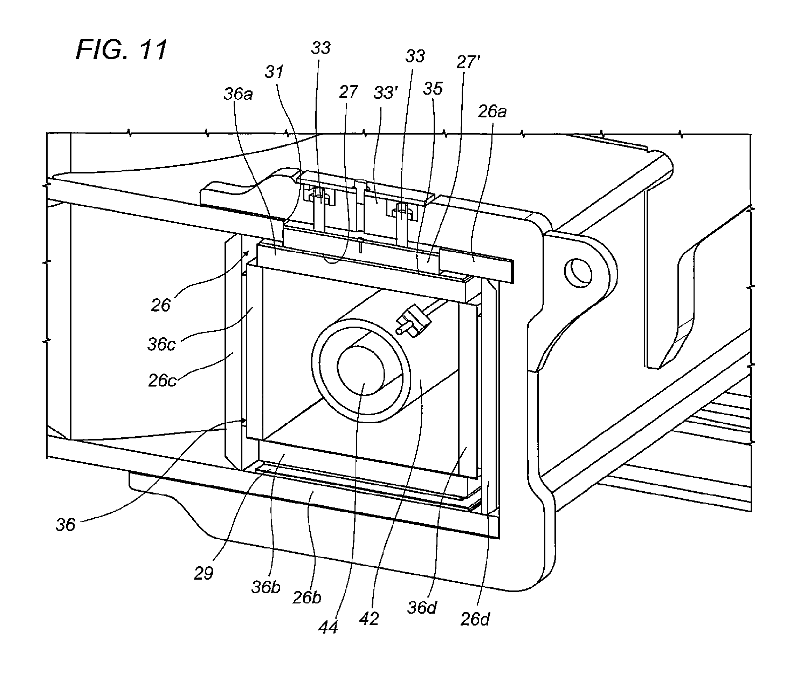

As shown also in Figures 3 and 11, each housing has, in particular, a quadrangular section composed of a top wall 26a, 28a, a bottom wall 26b, 28b and opposite side walls 26c, 26d and 28c, 28d, while as shown in Figures 4 and 11 in connection with the beam element 36 only - the retraction beam element 38 being the same - each beam element 36 in turn has a box-shaped quadrangular profile in turn defined by a top wall 36a, a bottom wall 36b and opposite side walls 36c, 36d. The overall size of the beam element is such that it can be inserted and mounted slidably in the respective housing 26.

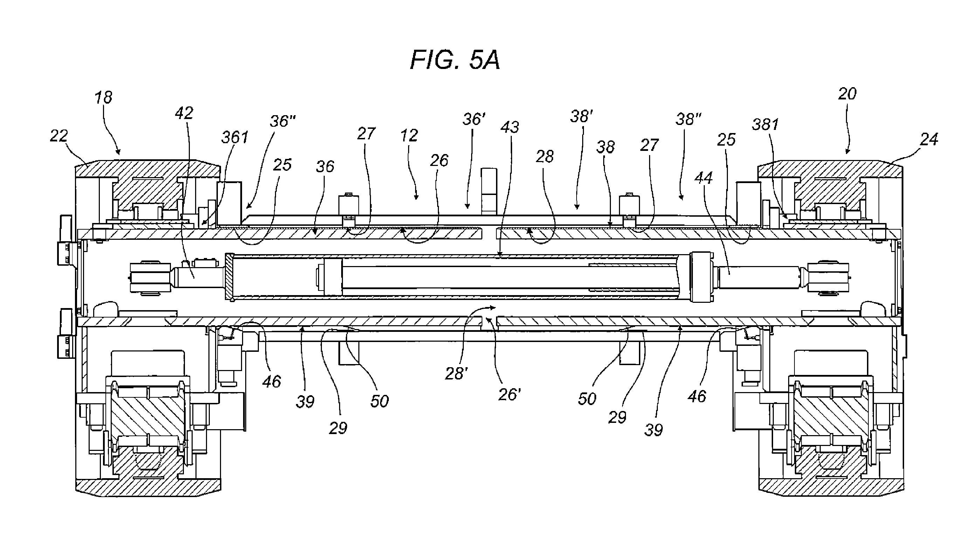

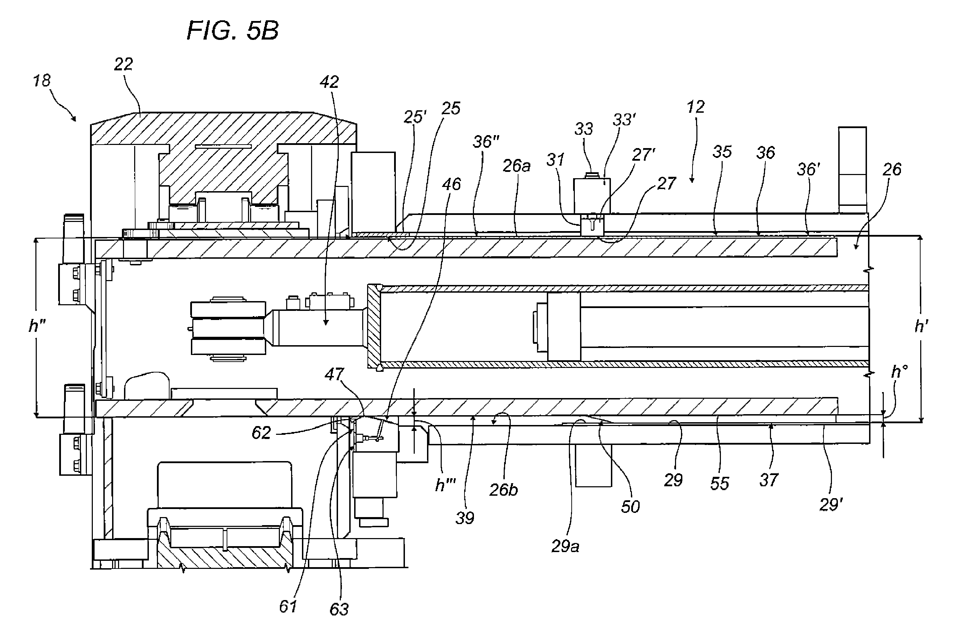

As shown in Figure 5A, each beam element 36, 38 supports and is connected to one end 361, 381 of the respective sub-frame 18, 20, from which it projects in cantilever fashion, and terminates on the opposite side with a free end to be inserted into the respective housing 26, 28.

Actuating means are provided for moving the sub-frames 18, 20 relative to the main frame 12.

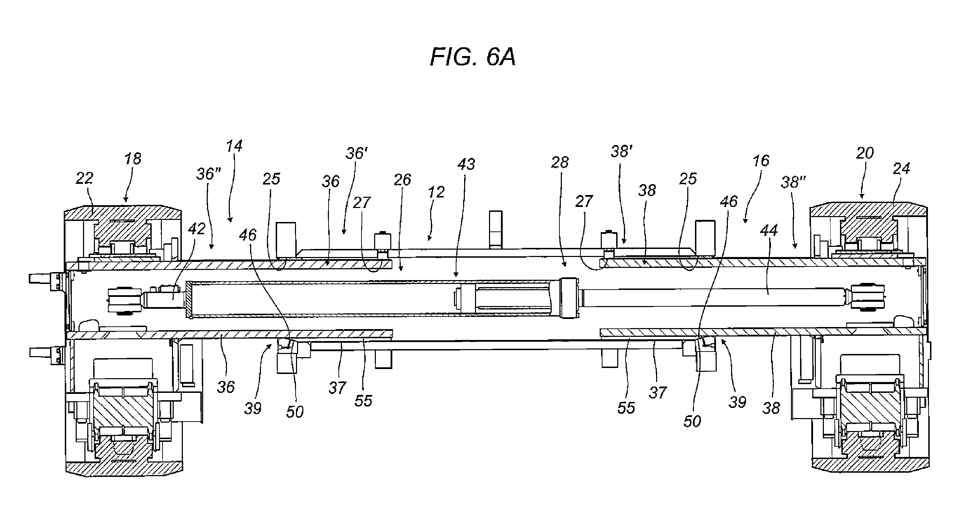

More specifically, these means are provided to move the first and second sub-frames 18, 20 between a first, reduced track gauge position (illustrated in Figure 5A), where the first and second sub-frames 18, 20 are each near the respective side 14, 16 of the main frame 12 and the respective beam elements 36, 38 are fully retracted inside the respective housings 26, 28, and a second, extended track gauge position (illustrated in Figure 6A), where the first and the second sub-frames 18, 20 are each away from the respective side 14, 16 of the main frame 12 and the respective beam elements 36, 38 extend outside the respective housings 26, 28.

It will be understood, however, that although this embodiment is especially preferred, this invention might also be applied to an undercarriage whose sub-frames can adopt working positions intermediate between the end positions illustrated in Figures 5A and 6A.

As schematically illustrated in Figure 5A, the means for extending and retracting the sub-frames are in the form of respective first and second hydraulically driven rods 42, 44, housed concentrically and in axially mobile manner in the housings 26, 28 and beam elements 36, 38. The rods 42, 44 have respective ends for connection to corresponding fastening portions (not shown in detail) on the opposing sub-frames 18, 20.

Advantageously, to keep the beam elements 36, 38 in the extended track gauge position, where the beam elements extend outside the respective housings 26, 28, it is sufficient to maintain a suitable pressure inside the means 43 that hydraulically drive the actuator rods 42, 44.

In practice, once the rods 42, 44 have reached the extended track gauge position, a non-return valve comes into operation to prevent the drive fluid from escaping from the respective rod 42, 44 drive cylinders. Other solutions suitable for maintaining the pressure that keeps the beam elements in the extended position are, however, also imaginable.

In practice, the drawings illustrate an undercarriage 10, of the variable track gauge type, comprising a main frame 12, defining first and second opposing sides 14, 16, in particular transversally opposite each other, and first and second opposing sub-frames 18, 20, each designed to mount respective means 22, 24 of undercarriage locomotion, said means being in particular in the form of crawler tracks or the like. The main frame 12 of the undercarriage has housings 26, 28, each of which opens onto a respective first and second side 14, 16 of the main frame, said housings 26, 28 being designed to slidably accommodate respective beam elements 36, 38 which are connected to, and more specifically, integral with, the respective sub-frames 18, 20.

Also provided are means 42, 44, in the form of respective linear actuators, and more specifically, in the form of hydraulic actuators, for moving the respective beam elements 36, 38 between at least a first, retracted position, illustrated in Figure 5A, defining a reduced track gauge of the undercarriage, where each sub-frame 18, 20 is close to the respective side 14, 16 and the beam element 36, 38 associated with it is retracted inside its housing 26, 28, and a second position, illustrated in Figure 6A, defining an extended track gauge of the undercarriage, where each sub-frame 18, 20 is away from the respective side 14, 16 and the beam element 36, 38 associated with it extends outside its housing 26, 28.

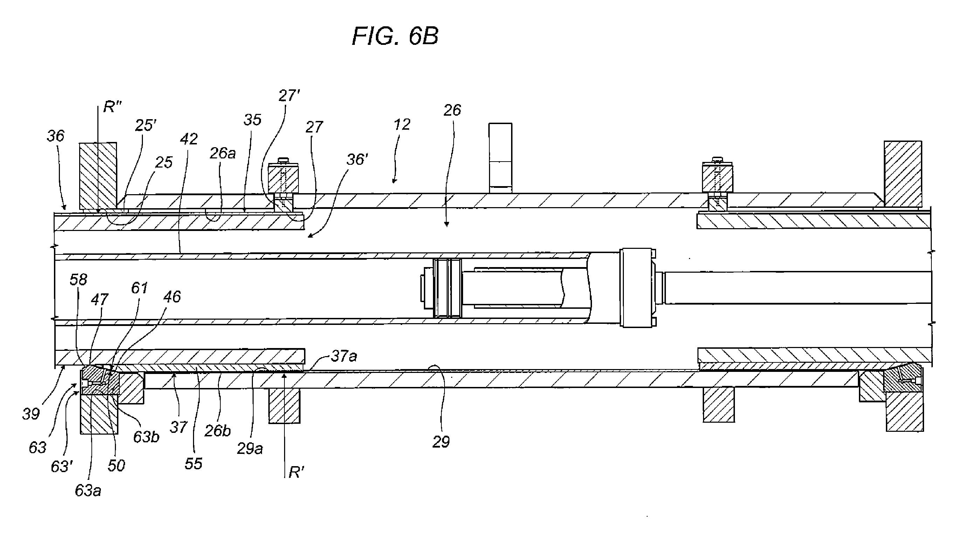

Inside each housing 26, 28 and associated with the respective beam element 36, 38, the undercarriage also comprises means 46, 50 acting in conjunction to stop the sliding movement of the respective beam element 36, 38 in the extended track gauge position, illustrated in Figures 6A and 6B.

In practice, the means for stopping the sliding movement comprise a first inclined surface 46, inside each housing 26, 28 and a second inclined surface 50 on the outside profile of the respective beam element 36, 38 and acting in conjunction with the first inclined surface 46, when the beam element 36, 38 extends outwards (as illustrated in Figure 6a), to lock the respective beam element 36, 38 in its housing 26, 28, that is to say, towards and against an opposing upper engagement surface provided in the housing 26, 28.

Advantageously, the lower surface 26b, 28b of the respective housing 26, 28 is provided with means 46 designed to be used to stop the sliding movement of the beam elements 36, 38 in the extended track gauge position, and means 29a, inside each housing and separate from the stop means 46, for defining a reaction that opposes the stress applied to the housing by the beam elements 36, 38 in the extended track gauge condition.

In practice, at the lower surface 26b, 28b of the respective housing 26, 28 there are means 46 designed to be used to stop the sliding movement of the beam elements 36, 38 in the extended track gauge position, and distinctly separate means 29a, for defining a reaction that opposes the stress which each of the beam elements 36, 38, when it is in the extended track gauge condition, discharges onto the respective housing 26, 28.

From another viewpoint, the means 46, 50 that stop the movement of the retraction elements 36, 38 are shaped in such a way that the reaction that opposes the stress applied to the respective housings by the beam elements in the extended track gauge condition is supported by a flat surface 29a, described in more detail below, located at the back of, that is, spaced, or longitudinally spaced from, the stop means 46 in the housings 26, 28.

In practice, as may be inferred from Figure 6B, in the extended condition, the reactions that the housing 26 imparts to the beam element 36, schematically represented by the arrows R' and R", are applied respectively at a lower engagement and reaction surface 29a located behind, and structurally separate from, the stopping surface 46 in the housing, and at an upper surface 25 in the vicinity of the outlet of the housing 26 itself.

In practice, in the undercarriage, an upwardly directed resultant reaction R' is applied to the beam element 36 in the extended track gauge condition, at a zone that is longitudinally spaced from the sliding stop surface 46 located in the housing 26, 28.

That way, the means 46 for stopping the sliding movement of the beam elements in the extended condition, since they do not have to support the stress applied by the beam elements, can be adapted solely to apply an action of stopping the sliding movement and clamping the retraction ram 36, 38 against the opposite upper face of the respective housing and can thus be made in a conveniently reduced size.

Advantageously, as illustrated, the respective beam element 36, 38 has an upper surface 35, in the form of a flat engagement surface for sliding against an opposing engagement and sliding surface 25 at the top face 26a, 28a of the housing 26, 28.

Also, advantageously, the beam element 36, 38 has an underside surface 37 extending from an inside, or rear, end 36', 38' of a beam element 36, 38, which engages and slides on an opposing engagement and sliding surface 29 located on the lower face 26b, 28b of the respective housing 26, 28.

Advantageously, the engagement and sliding underside surface 37 of each beam element 36, 38, in the extended track gauge condition, engages the lower engagement and sliding surface 29 of the respective housing 26, 28.

According to another viewpoint, each beam element 36, 38 moves from the reduced track gauge position to the extended track gauge position and vice versa while keeping the engagement and sliding underside surface 37 in contact with the bottom engagement and sliding surface 29 of each housing 26, 28.

In practice, each of the beam elements 36, 38 has a flat underside surface 37 parallel to the sliding direction of the element itself and which extends from the inside, or rear, end 36', 38' of the beam element 36, 38, which engages and slides on an opposing engagement and sliding surface 29 parallel to the sliding direction of the beam element 36, 38 itself, or to the direction of extension of the housing 26, 28, said surfaces 37, 29 remaining mutually engaged even when the beam element 36, 38 is in the outwardly extended position to define the wide track gauge of the undercarriage.

That way, in the wide track gauge condition, the beam element 36, 38 stresses the lower surface 29a and does not appreciably stress the corresponding stop surface 46, or rather, the block 61 (described in more detail below) that defines it, which can thus be conveniently limited in size and weight.

That means the wedges or elements 46 for stopping the sliding movement of the beam elements can be fitted to the main frame of the undercarriage according to the invention easily and without problems and saving much time.

Further, this solution prevents vibration or juddering during movement of the beam element or retraction ram from the reduced to the extended track gauge position, thus avoiding nuisance to the operator, damage to the apparatus or any other disturbance during the work being done.

Each of the beam elements 36, 38 also has a flat top surface 35 parallel to the sliding direction of the beam element 36, 38 itself and which engages and slides against an opposing surface engagement and sliding surface 25, also parallel to the sliding direction of the beam element 36, 38, or to the longitudinal direction of extension of the housing 26, 28.

This engagement and sliding surface 25 is provided at the top face 26a, 28a of the housing 26, 28.

According to another advantageous aspect, at the inside, or rear, end of it 36', 38', the beam element 36, 38 has a height h' which is defined by the vertical distance between the horizontal surfaces 35 and 37 of the beam element itself and which is greater, or slightly greater, than the perpendicular, or vertical, distance between the lower surface 29 and the upper sliding and engagement surface 25 in the respective housing 26, 28. That way, as will become clearer as this description continues, it is possible to impart to the beam element 36 a condition of preloading, or flexural preloading consisting of a bending stress opposite to that normally applied to the beam element 36 itself by the weight of the undercarriage and apparatus.

As illustrated, the beam element 36, 38 has an engagement and sliding underside surface 39 at its front, or outside (or downstream) end 36", 38", in the form of a flat underside surface parallel to the sliding direction of the beam element itself 36, 38.

In practice, each beam element or retraction ram 36, 38 has a rear, or inside (or upstream) end or portion 36', 38' and a front, or outside (or downstream) end or portion 36", 38".

In practice, each beam element 36, 38 has a flat engagement and sliding underside surface 39, parallel to the sliding direction of the beam element 36, 38 and located at a front end portion 36", 38" of the respective beam element 36, 38.

The means 50 for locking the beam elements 36, 38 are located at an intermediate zone of each of the beam elements 36, 38 themselves, while the means 46 for stopping the sliding of each of the beam elements 36, 38 in its housing are located at the longitudinal end, or outlet opening end, of the respective housing 26, 28.

As illustrated, the means 46, 50 that act in conjunction to stop the sliding of the respective beam element 36, 38 in the extended track gauge position comprise an inclined surface 46 located inside the respective housing 26, 28 and cooperating with an inclined surface 50 located on the outer profile of the respective beam element 36, 38.

The inclined surfaces 46, 50 operate in conjunction in such a way as to tighten the beam element against a corresponding surface 25 of the respective housing 26, 28.

Said wide engagement and sliding underside surface 37 on each beam element 36, 38 is located behind, or upstream of, the stop means 50 on the beam element 36, 38.

The underside surface 39 at the front portion 36", 38" of the respective beam element is located at the front of the stopping means 50 on the beam element 36, 38 itself.

The front underside surface 39 for engagement and sliding of the respective beam element 36, 38 faces and engages a perpendicular end edge 47 of the stopping means 46 located inside the respective housing 26, 28.

Also, advantageously, the height h" of the front portion 36", 38" of the beam element 36, 38, that is, the perpendicular, or vertical, distance between the front engagement and sliding underside surface 39 and the top surface 35 for engagement and sliding of the same beam element 36 and 38, substantially corresponds, or coincides, with the perpendicular, or vertical, distance between a perpendicular end edge 47 of the stopping means 46 in the housing 26, 28 and the top sliding surface 25 of the respective housing 26, 28. More in detail, there is a slight play, in particular of a few millimetres, from 7 mm to 4 mm and preferably around 3 mm between h" and the perpendicular distance between the surfaces 25 and 47.

According to another advantageous aspect, the bottom engagement surface 29a in the housing 26, 28, in the extended track gauge condition, is spaced, in particular longitudinally spaced, from the stopping means 46 in the housing 26, 28 itself. According to another aspect, the underside surface 37 for engaging the beam element 36, 38 on the rear portion 36', 38' of the beam element itself extends longitudinally for a distance substantially corresponding to half the length of the beam element 36, 38 itself.

In practice, the flat, upstream, or rear, surface 37 of the beam element 36, 38 is parallel to, and perpendicularly spaced from the underside surface 39 of the front, or downstream, portion of the beam element 36, 38 itself.

As illustrated, the inclined surface 46 in the housing 26, 28 is located at or in the vicinity of the outlet opening of the respective housing 26, 28, and, more specifically, at the lower end edge of the respective housing 26, 28.

Further, the inclined surface 50 of each beam element 36, 38 in the extended track gauge condition, illustrated in Figures 6A and 6B, lies at or in the vicinity of the outlet opening of the respective housing 26, 28.

The rear and front engagement and sliding surfaces 37, 39, between which there extends the inclined surface 50 that stops the beam element 36, 38, are perpendicularly spaced from each other by an amount smaller than the height h"' of the inclined surface 46 at the respective housing 26, 28, or of the portion of this that protrudes from the lower surface 26b of the respective housing 26, 28.

Also, the height h° of the inclined surface 50 of the beam element 36, 38 is less than the height h"' of the inclined surface 46 at the respective housing 26, 28.

According to another aspect, the length of the inclined surface 46, at and longitudinally along the housing 26, 28, is less than a tenth of the length of each housing 26, 28, or of the length of the respective beam element 36, 38.

Further, the length of the inclined surface 46 at each housing is between 10 mm and 300 mm, and is preferably between 55 mm and 80 mm.

Also, the height of the inclined surface 46 at each housing is between 10 mm and 100 mm, and is preferably between 15 mm and 25 mm.

The inclined surface 50 for locking the beam element 36, 38 is located at one end, directed towards the front of the beam element 36, 38, of a respective shim, or plate 55 of metallic material, which is integral with, and in particular is welded to the respective outside or lower surface, of the metal tube constituting the beam element 36, 38, at its rear, or upstream, portion 36', 38'. The plate 55 constitutes the flat, engagement and sliding underside surface 37.

Also, the rear end of the engagement underside surface 37 on the rear portion of the beam element 36, 38 is spaced from the stop means 50 on the beam element by an amount greater than twice, and more specifically, greater than five times, the length of the stop means 50.

Advantageously, the top engagement and sliding surface 25 of each housing 26, 28 is located on a portion 25' protruding from the face 26a, 28a of the respective housing 26, 28.

In particular, the protruding portion 25' is defined by, or in the form of, a shim or plate, preferably metallic, that is integral with, and in particular is welded to, the respective face 26a, 28a of the housing 26, 28.

The protrusion 25' defining the engagement and sliding surface 25 lies at or in the vicinity of the outlet opening of the respective housing 26, 28, that is, the top engagement and sliding surface 25 of the housing 26, 28 lies at or in the vicinity of the outlet opening of the respective housing 26, 28.

The face 25 of the shim 25' is suitably machined, in particular by grinding.

The length of the engagement underside surface 37 of the rear portion 36', 38' of a beam element 36, 38 is greater than twice, and more specifically, greater than five times, the length of the inclined surface 46 at the housing 26, 28.

As illustrated, the length of the top engagement and sliding surface 25 of the housing 26, 28 substantially corresponds to, and in particular, is slightly greater than, the length of the inclined surface 46 of the housing 26, 28.

Also, as illustrated, the top protrusion 25', or shim, and the corresponding top engagement and sliding surface 25 of the housing 26, 28 are vertically aligned, or perpendicularly aligned, with the inclined surface 46, or stop block, on the lower surface of the respective housing 26, 28.

The lower engagement and sliding surface 29 of each housing 26, 28 is located on a portion 29' protruding from the corresponding lower face 26b, 28b of the respective housing 26, 28.

Also, as illustrated, the protruding portion 29', and in particular the front of it, is perpendicularly aligned with the respective adjustable engagement surface 27.

In practice, said protruding portion 29' is defined by, or in the form of, a shim or plate, made of metal, that is integral with, and in particular is welded to, the respective lower face 26b, 28b of the housing 26, 28.

It will therefore be appreciated that the shims 25', 29' constitute means for reducing the height of the respective housings 26, 28.

In particular, as mentioned above, these reaction means 29, which apply a reaction R' to the rear part of the beam element, create a state of preloading, or prestressing, by applying to the beam element 36, 38 a bending stress that opposes the bending stress created by the weight of the undercarriage and of the apparatus mounted on it. This therefore provides means for prestressing the beam element 36, 38 in the extended condition, which oppose the bending stress normally applied to the beam element 36, 38 itself.

From another viewpoint, the resultant R' of the pressure that opposes the stress applied to the respective lower surfaces of the housings 26, 28 by the beam elements 36, 38 in the extended track gauge condition is spaced from the stop means 46 in the housing 26, 28.

Advantageously, the means for prestressing the beam element 36, 38 are in the form of shimming means 29' in the lower part of the housing 26, 28, and constitute engagement and sliding means 29 in the housing 26, 28.

The length of the bottom engagement and sliding surface 29 of each housing 26, 28 is greater than the length of the engagement and sliding surfaces 37 on the beam element 36, 38.

Further, the shimming, or protruding, means 29' on the bottom part of the housing 26, 28 extend at an intermediate zone of the housing 26, 28, starting from the rear end 26', 28' of the housing 26, 28 itself.

As illustrated, the lower engagement and sliding surface 29 has a front part 29a, while the engagement and sliding underside surface 37 on the beam element 36, 38 has a rear end 37a. Advantageously, in the extended track gauge condition, the front part 29a of the lower engagement and sliding surface 29 in the housing 26, 28 is engaged with the rear end 37a of the engagement and sliding underside surface 37 on the beam element 36, 38.

The shimming elements, or protrusions, 25' and 29' are located in the respective housings 26, 28 and are engaged by the beam element, in particular by the top surface 35 and underside surface 37 for engagement and sliding of the beam element in both the retracted or reduced track gauge condition of the beam element 36, 38, and in the extended track gauge condition.

As may be inferred also with reference to Figure 11, at an intermediate zone of the top surface 26a, 28a of the respective housing 26, 28, means 27 are provided for engaging a matching top surface 35 of the beam element 36, 38.

Also, at the top surface 26a, 28a of the housing 26, 28, means 27 are provided for engaging a matching top surface 35 of the beam element 36, 38 and being in the form of perpendicularly movable means.

The perpendicularly movable means 27 comprise a respective block 27' having a bottom end surface 27 for engaging the beam element 36, 38, and movable within a cavity, in particular a vertical or perpendicular housing cavity 31 that leads into the respective housing 26, 28, in particular at the top wall 26a, 28a of the housing.

Adjustment means 33 in the form of adjustment grub screws, housed perpendicularly in a corresponding upper block 33', said adjustment means being designed to move the engagement means 27 relative to the opposing surface of the beam element 36, 38, that is, into and towards the housing 26, 28.

Thus, the grub screws 33 can be used to adjust the height of the respective housing 26, 28 at the front end 29a of the lower engagement and sliding surface 29 of the housing in order to eliminate any play during movement of the respective beam element 36, 38.

Advantageously, the movable engagement means 27 are vertically aligned with the engagement surface 29, in particular with its front portion 29a at the lower face of the respective housing 26, 28.

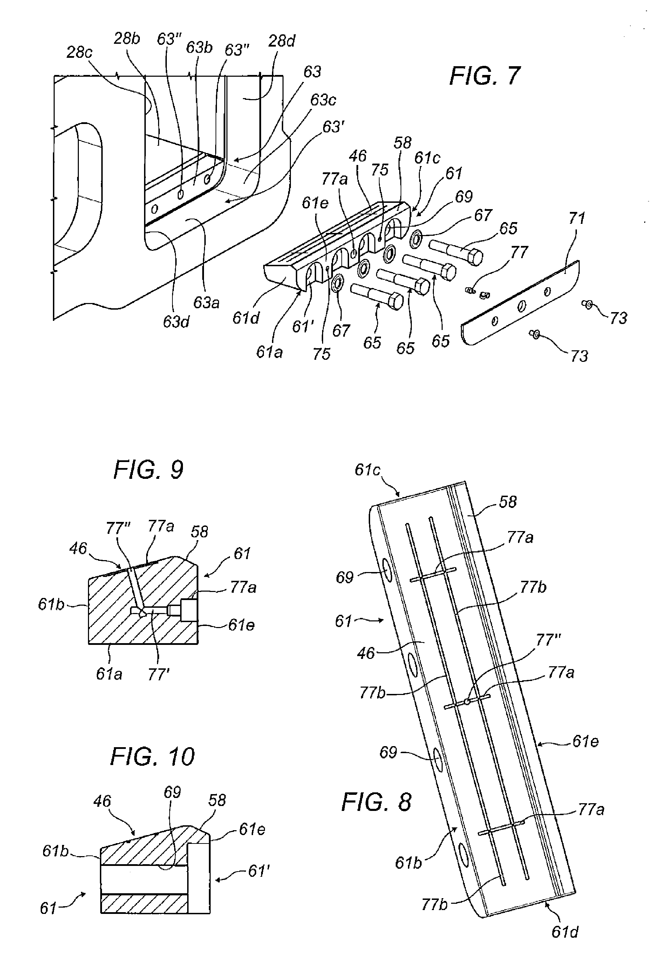

As may be inferred also with reference to Figures 7 to 10, the inclined stop surface 46 in the housing 26, 28, is located or formed on a respective block 61 housed in a socket 63 below the housing 26, 28 and leading into the housing 26, 28 in such a way as to extend the inclined stop surface 46 into the housing 26, 28 itself. As may be inferred also with reference to Figure 7, the socket 63 is located at the bottom of the housing 26, 28 and is open at the top to receive the protruding extension of the top part of the block 61 which takes the inclined stop surface 46 into the housing.

Advantageously, the block 61 is in the form of a stubby element whose height is substantially equal to three times the height of the inclined stop surface 46, while the socket 63 for housing the stop block has a height greater than the height of the inclined surface 46, and in particular, a height greater than twice the height of the inclined surface 46.

This provides goods resistance to the stresses applied to the stop block 61.

Although the above mentioned dimensions and proportions of the stop block are especially preferred, it will be understood that other dimensions and proportions are imaginable for this stop block.

Advantageously, the socket 63 has a fixed, bottom or horizontal surface 63a for supporting a flat underside surface 61a of the block with the stop means 46, said surface 63a being parallel to the lower surface 26b, 28b of the respective housing and lower down than the latter.

The socket 63 for housing the stop block 61 also has a rear, or vertical, surface 63b for supporting a rear flat surface 61b of the block with the stop means 46.

As may be inferred also with reference to Figures 12 and 13, between the rear or vertical surface 61b of the block 61 and the corresponding perpendicular, or vertical, surface 63b of the housing, it is also possible to place a matching shim of desired size, labelled S1 or S2, respectively, for longitudinally positioning the block with the stop means 43 in the suitable longitudinal position required. Means are thus provided for longitudinally positioning the stop block 61 and the corresponding engagement and stopping surface 46.

The insert S1 S2 is obviously made of metallic material and affords holes for the screws 65 used to anchor the block 61, as will become clearer as this description continues.

Further, the socket 63 for housing the stop block 61 has opposing lateral, or perpendicular, surfaces 63c, 63d that support opposite lateral surfaces 61c, 61d of the stop block 61.

As illustrated, the socket 63 for housing the stop block 61 is located at the outlet opening of the housing 26, 28.

As illustrated, the socket 63 for housing the stop block 61 has a front opening 63' perpendicularly or vertically flush with the corresponding end of the housing 26, 28.

In practice, the stop block 61 is housed in a socket 63 and has fixed walls made integrally with the structure of the undercarriage. This therefore obviates the prior art need for undercarriages to provide means of adjusting the position of the inclined stop surface and of the respective block, with obvious advantages in terms of lower production costs and easier maintenance for the undercarriage according to this invention.

Also, advantageously, the socket 63 for housing the stop block 61 is open at the front, at 63', to enable the stop block 61 to be fitted or, if necessary, removed.

In practice, once the beam element 36, 38 has been placed in the respective housing 26, 28 the stop block 61 is inserted into the socket 63 through the front opening 63' with a movement parallel with the respective longitudinal housing 26, 28 and with the direction along which the retraction ram 36, 38 slides.

In practice, the stop block 61 has a first, inclined surface 46 directed towards the inside of the housing 26, 28 and a second inclined surface 58, on the longitudinal extension of the first inclined surface 46 and angularly opposite the latter, said inclined surface 58 being directed towards the outside of the respective housing to form means for engaging and stopping the inward sliding of the beam element 36, 38.

For the purpose, each beam element 36, 38 has an inclined surface or element for stopping its inward sliding, denoted by the reference numeral 62 and located on the flat underside surface 39 of the beam element 36, 38, in the vicinity of the respective sub-frame 18, 20.

The height of the stop block 61 is between 20 mm and 200 mm, preferably between 50 mm and 85 mm.

The inclined stop surface 46 or 50 makes an angle of between 7° and 30°, in particular between 10° and 20° and preferably between 12.5° and 17.5° with the direction of beam element sliding, with the direction of extension of the respective housing 26, 28 or with the direction of extension of the beam element 36, 38.

Advantageous means are also provided for fastening the stop block 61 to the undercarriage, in particular for fastening the stop block 61 in the socket 63.

The means for fastening the stop block 61 engage the rear wall 63b of the socket 63.

Further, the means for fastening the stop block 61 are in the form of screw means 65 and are, in particular, in the form of four fastening screws 65, whose large heads fit into corresponding front cavities 61' formed in a front vertical face 61e of the block 61. Corresponding washers are denoted by the reference numeral 67.

The elements 65 for fastening the stop block 61 pass through corresponding holes 69 which are made in the stop block 61 and which extend longitudinally along the block 61 itself.

The fastening screws 65 engage, with their threaded ends, corresponding threaded holes 63" made in the rear wall 63b of the socket 61.

A corresponding hole 69, in particular and preferably a first and a second hole 69, 69 made in the stop block 61 for the passage of the screw means 65, have a large diameter and an internal thread that does not cooperate with the fastening screw means 65 to provide means for engaging means used to extract the stop block 61 from the socket 63.

The means for fastening the stop block 61 also comprise a cover plate 71. Further, the reference numeral 73 denotes screws for fastening the plate 71 to the block 61, said screws 73 engaging corresponding holes 75 made in the front wall 61a of the block 61.

The reference numeral 77 denotes a nozzle or grease nipple housed in a hole 77a, and designed to feed a lubricant which passes through a central conduit 77' made centrally in the block 61 to reach, through a respective outlet hole 77", longitudinal and transversal, grooves 77a, 77b constituting distribution means on the rest of the stop surface 46.

Thus provided are means for lubricating the first and second inclined surfaces 46, 50 for stopping the sliding movement of the beam elements from the respective housings 26, 28. Said means for lubricating the first and second inclined surfaces 46, 50 comprise a plurality of greasing channels on the first inclined surface 46.

Advantageously, the means 46, 50 for stopping the beam element are provided, both on the beam element and on the respective housing, with a width that substantially corresponds to the transversal surface of the housing or beam element.

Advantageously, the width of the engagement and sliding surfaces 25, 27, 29 and 35, 37 correspond or substantially correspond to the width of the housing and/or to the opposing surface of the beam element 36, 38.

As mentioned, suitable means are provided for stopping each beam element 36, 38 from retracting into the corresponding housing 26, 28.

Said retraction stop means are in the form of a first inclined face 58 located inside the housing 26, 28 and a second inclined face 62 integral with the respective beam element 36, 38 and acting in conjunction with the first face 58 in the housing 26, 28 in order to stop the respective beam element 36, 38 when it is retracted into the housing 26, 28 (as shown in Figure 5A).

A preferred inclination for the inclined faces 58, 62 for stopping the beam elements while the sub-frames are closing in on the main frame is between 15° and 80°, preferably between 20° and 60°.

The first inclined face 58 in the housing 26, 28 is situated in the vicinity of the outlet opening of the housing 26, 28 that accommodates the beam element 36, 38, while the second inclined face 62, integral with the respective beam element 36, 38, is situated at the end 36", 38" of the beam element 36, 38 that extends from the respective sub-frame 18, 20.

This undercarriage advantageously reduces the bending actions and is also advantageous in that it allows all play, or clearance, between the retraction rams 36, 38 and the corresponding housings 26, 28 to be obviated.

It should also be noted that the invention also contemplates the use of retraction rams and respective housings having a cross section other than quadrangular in shape, for example, a circular, trapezoidal or polygonal cross section, that is, retraction rams of any suitable kind, even in the form of positional beams that are parallel with each other, or of telescoping or other kind.

As illustrated, the opposing housings 26, 28 for respective beam elements 36, 38 are aligned with each other, being defined by a common tubular element.

This undercarriage is suitable for use as a base for mounting and moving any apparatus or machine, such as crawler drills, crawler lifts, cranes, excavators, soil working machines and others.

The invention described is susceptible of industrial application and may be modified and adapted in several ways without thereby departing from the scope of the inventive concept. Moreover, all the details of the invention may be substituted by technically equivalent elements.

## Claims

1. An undercarriage (10) comprising a main frame (12) and a first and second opposite sub-frames (18, 20) each for supporting undercarriage movement means (22, 24), where the main frame (12) has at least one housing (26, 28) for slidably accommodating a respective beam element (36, 38) that mounts the respective sub-frame (18, 20), means also being provided for moving the beam element (36, 38) between at least one first position defining a reduced track gauge of the undercarriage, and a second position defining an extended track gauge of the undercarriage; the undercarriage being **characterized in that** the bottom surfaces (26b, 28b) of the respective housings (26, 28) afford means (46) for stopping the sliding movement of the beam elements (36, 38) in the extended track gauge condition, and means (29a), separate from the stop means (46) in the housing, for defining a reaction (R') that opposes the stress created by the beam elements (36, 38) in the extended track gauge condition.

2. The undercarriage according to claim 1 or according to the preamble to claim 1, **characterized in that** each beam element (36, 38), in the extended track gauge position has an underside surface (37), parallel to the sliding direction of the beam element (36, 38) itself and which engages a corresponding surface (29), also parallel to the sliding direction of the beam element (36, 38), at the bottom face of the housing (26, 28).

3. The undercarriage according to either of the foregoing claims or according to the preamble to claim 1, **characterized in that** each beam element (36, 38) has a top surface (35), parallel to the sliding direction of the beam element (36, 38) and which engages and slides against an opposing surface (25), also parallel to the sliding direction of the beam element (36, 38), at the top face (26a, 28a) of the housing (26, 28).

4. The undercarriage according to claim 3, **characterized in that** the top engagement and sliding surface (25) is located at or in the vicinity of the outlet opening of the respective housing (26, 28).

5. The undercarriage according to any of the foregoing claims or according to the preamble to claim 1, **characterized in that** each beam element (36, 38) moves from the reduced track gauge position to the extended track gauge position and vice versa while keeping the engagement and sliding underside surface (37) engaged with the bottom engagement and sliding surface (29) of the housing (26, 28).

6. The undercarriage according to any of the foregoing claims or according to the preamble to claim 1, **characterized in that** each beam element (36, 38) has a respective rear end portion (36', 38') whose height (h') is greater than the perpendicular distance between the bottom and top engagement and sliding surfaces (29) and (25) inside the housing (26, 28).

7. The undercarriage according to any of the foregoing claims or according to the preamble to claim 1, **characterized in that** it comprises, inside the housing (26, 28) and associated with the respective beam element (36, 38), means (46, 50) acting in conjunction to stop the sliding of the respective beam element (36, 38) inside its housing (26, 28), in the extended track gauge position.

8. The undercarriage according to claim 7, **characterized in that** the means (50) for stopping the sliding of the respective beam element (36, 38) are located in an intermediate zone of the beam element (36, 38).

9. The undercarriage according to claim 7 or 8, **characterized in that** the means (46) for stopping the sliding of the respective beam element (36, 38) are located at the end outlet opening of the respective housing (26, 28).

10. The undercarriage according to any of the foregoing claims from 7 to 9, **characterized in that** the means (46, 50) that act in conjunction to stop the sliding of the respective beam element (36, 38) in the extended track gauge position comprise an inclined surface (46), located inside the respective housing (26, 28) and cooperating with an inclined surface (50) located at the outer profile of the respective beam element (36, 38) to tighten the beam element against a corresponding surface (25, 27) of the respective housing (26, 28).

11. The undercarriage according to any of the foregoing claims from 7 to 10, **characterized in that** the engagement and sliding underside surface (37) of each beam element (36, 38) is located behind the stop means (50) on the beam element (36, 38).

12. The undercarriage according to any of the foregoing claims or according to the preamble to claim 1 **characterized in that** each beam element (36, 38) has an engagement and sliding underside surface (39), parallel to the sliding direction of the beam element (36, 38) and is located at a front end portion (36",38") of the respective beam element (36, 38).

13. The undercarriage according to claim 12, **characterized in that** the engagement and sliding underside surface (39) of the beam element (36, 38) at the front end portion (36", 38") of the beam element (36, 38) is located in front of the stop means (50) on the beam element (36, 38).

14. The undercarriage according to claim 12 or 13, **characterized in that** the engagement and sliding underside surface (39) of each beam element (36, 38) at the front end portion (36", 38") of the beam element (36, 38) slidably engages a perpendicular end edge (47) of the stop means (46) inside the housing (26, 28).

15. The undercarriage according to any of the foregoing claims, **characterized in that** the bottom engagement surface (29) of the housing (26, 28), in the extended track gauge condition is longitudinally spaced from the stop means (46) inside the housing (26, 28).

16. The undercarriage according to any of the foregoing claims or according to the preamble to claim 1, **characterized in that** the height (h") of the front portion (36", 38") of the beam element (36, 38) substantially corresponds to the perpendicular distance between a perpendicular end edge (47) of the stop means (46) inside the housing (26, 28) and the top engagement and sliding surface (25) inside the respective housing (26, 28).

17. The undercarriage according to any of the foregoing claims, **characterized in that** the inclined surface (46) at the housing (26, 28) is located at or in the vicinity of the outlet opening of the respective housing (26, 28).

18. The undercarriage according to any of the foregoing claims, **characterized in that** the inclined surface (50) of the beam element (36, 38) in the extended track gauge condition lies at or in the vicinity of the outlet opening of the respective housing (26, 28).

19. The undercarriage according to any of the foregoing claims, **characterized in that** the front and rear engagement and sliding surfaces (37, 39) of each beam element (36, 38) are perpendicularly spaced by a distance smaller than the height (h''') of the inclined surface (46) at the respective housing (26, 28).

20. The undercarriage according to any of the foregoing claims, **characterized in that** the height (h°) of the inclined surface (50) of the beam element (36, 38) is less than the height (h"') of the inclined surface (46) at the respective housing (26, 28).

21. The undercarriage according to any of the foregoing claims, **characterized in that** the length of the engagement underside surface (37) of the rear portion of the beam element (36, 38) is more than twice the length of the inclined surface (46) at the respective housing (26, 28).

22. The undercarriage according to any of the foregoing claims from 10 to 21, **characterized in that** the length of the inclined surface (46) is between 10 mm and 300 mm, and preferably between 55 mm and 80 mm.

23. The undercarriage according to any of the foregoing claims from 10 to 22, **characterized in that** the height of the inclined surface (46) is between 10 mm and 100 mm, and is preferably between 15 mm and 25 mm.

24. The undercarriage according to any of the foregoing claims from 10 to 23, **characterized in that** the inclined surface (50) for tightening on the beam element (36, 38) is located at one end of a spacer (55) integral with the corresponding outside surface of the beam element (36, 38).

25. The undercarriage according to any of the foregoing claims from 3 to 24, **characterized in that** the top engagement and sliding surface (25) of each housing (26 28) is provided on a portion (25') protruding from the corresponding face (26a, 28a) of the housing (26, 28).

26. The undercarriage according to claim 25, **characterized in that** the protruding portion (25') on the top engagement and sliding surface (25) of each housing (26, 28) is perpendicularly aligned with the respective stopping surface (46) at the housing (26, 28) itself.

27. The undercarriage according to claim 25 or 26, **characterized in that** the top engagement and sliding surface (25) of each housing (26, 28) is provided on a protruding portion (25') in the form of a corresponding spacer integral with the corresponding face (26a, 28a) of the housing (26, 28).

28. The undercarriage according to any of the foregoing claims or according to the preamble to claim 1, **characterized in that**, in the extended track gauge condition, it comprises means for prestressing the beam element (36, 38) in a manner opposing the bending stress normally acting on the beam element (36, 38) itself.

29. The undercarriage according to claim 28, **characterized in that** the means for prestressing the beam element (36, 38) are in the form of a spacer (29') at the housing (26, 28).

30. The undercarriage according to claim 29, **characterized in that** the spacer means (29') at the housing (26, 28) and constituting prestressing means are located at the bottom of the housing (26, 28).

31. The undercarriage according to any of the foregoing claims from 28 to 30, **characterized in that** the prestressing means are longitudinally spaced from the stop means (46) inside the housing (26, 28).

32. The undercarriage according to any of the foregoing claims from 28 to 31, **characterized in that** the prestressing means constitute engagement means (29) slidable inside the housing (26, 28).

33. The undercarriage according to any of the foregoing claims, **characterized in that** the bottom engagement and sliding surface (29) of each housing (26, 28) is provided on a portion (29') protruding from the corresponding face (26b, 28b) of the housing (26, 28).

34. The undercarriage according to claim 33, **characterized in that** the bottom engagement and sliding surface (29) of each housing (26, 28) is provided on a protruding portion (29') in the form of a corresponding spacer integral with the corresponding face (26b, 28b) of the housing (26, 28).

35. The undercarriage according to any of the foregoing claims, **characterized in that** the length of the bottom engagement and sliding surface (29) of the housing (26, 28) is greater than the length of the engagement and sliding surfaces (37) on the beam element (36, 38).

36. The undercarriage according to any of the foregoing claims, **characterized in that** the spacer means or protrusion (29') on the bottom side of the housing (26, 28) lie in an intermediate zone of the housing (26, 28).

37. The undercarriage according to any of the foregoing claims, **characterized in that** the front section (29a) of the bottom engagement and sliding surface (29) of the housing (26, 28) is engaged with the rear end (37a) of the engagement and sliding underside surface (37) of the beam element (36, 38).

38. The undercarriage according to any of the foregoing claims, **characterized in that** the spacer means or protrusion (29') on the bottom side of the housing (26, 28) are engaged with the engagement and sliding underside surface (37) of the beam element (36, 38) in the retracted condition.

39. The undercarriage according to any of the foregoing claims or according to the preamble to claim 1, **characterized in that** an intermediate zone of the top surface (26a, 28a) of each housing (26, 28), affords means (27) for engaging a corresponding top surface (35) of each beam element (36, 38).

40. The undercarriage according to any of the foregoing claims or according to the preamble to claim 1, **characterized in that** the top surface (26a, 28a) of each housing (26, 28) affords means (27) which engage a corresponding top surface (35) of each beam element (36, 38) and which are in the form of perpendicularly mobile means.

41. The undercarriage according to claim 39 or 40, **characterized in that** the protruding portion (29') on the bottom engagement and sliding surface (29) of each housing (26, 28) is perpendicularly aligned with the respective adjustable engagement surface (27).

42. The undercarriage according to claim 40 or 41, **characterized in that** the perpendicularly mobile engagement means comprise a block (27) having a flattened surface (27) for engaging the beam element (36, 38).

43. The undercarriage according to any of the foregoing claims from 40 to 42, **characterized in that** the engagement means (27) comprise a block (27') which moves within a housing cavity (31) that leads into the respective housing (26, 28).

44. The undercarriage according to any of the foregoing claims from 39 to 43, **characterized in that** it comprises adjustment means (33) for moving the engagement means (27) towards the inside of the housing (26, 28).

45. The undercarriage according to claim 44, **characterized in that** the adjustment means (33) for moving the engagement means comprise grub screw means.

46. The undercarriage according to any of the foregoing claims from 40 to 45, **characterized in that** the engagement means (27) are perpendicularly aligned with the bottom engagement and sliding surface (29) of the housing (26, 28).

47. The undercarriage according to any of the foregoing claims from 40 to 46, **characterized in that** the engagement means (27) are perpendicularly aligned with the front part (29a) of the bottom engagement and sliding surface (29) of the housing (26, 28).

48. The undercarriage according to any of the foregoing claims or according to the preamble to claim 1, **characterized in that** the inclined stopping surface (46) at the housing (26, 28) is located on a respective block (61) housed in a socket (63) below the housing (26, 28) and leading into the housing (26, 28) in such a way as to extend the inclined stop surface (46) into the housing (26, 28) itself.

49. The undercarriage according to claim 48, **characterized in that** the socket (63) for the stop block (61) has a fixed bottom surface (63a) for supporting the underside (61a) of the block.

50. The undercarriage according to claim 48 or 49, **characterized in that** the socket (63) for the stop block (61) has a rear surface (63b) that supports a rear surface (61b) of the block.

51. The undercarriage according to any of the foregoing claims from 48 to 50, **characterized in that** it comprises means for longitudinally positioning the stop block (61).

52. The undercarriage according to claim 51, **characterized in that** between the rear surface (63b) and the corresponding rear surface (61b) of the block, there is a shim (S1, S2) of suitable thickness.

53. The undercarriage according to any of the foregoing claims from 48 to 52, **characterized in that** the socket (63) for the stop block (61) has opposite lateral surfaces (63c, 63d) that support opposite lateral surfaces (61c, 61d) of the block.

54. The undercarriage according to any of the foregoing claims from 48 to 53, **characterized in that** the socket (63) for the stop block (61) is open at the front to allow the stop block (61) to be inserted and removed when necessary.

55. The undercarriage according to any of the foregoing claims from 48 to 54, **characterized in that** the socket (63) for the stop block (61) is located at the outlet opening of the housing (26, 28).

56. The undercarriage according to any of the foregoing claims from 48 to 55, **characterized in that** the stop block (61) has an inclined top stop surface (46) facing the inside of the housing.

57. The undercarriage according to any of the foregoing claims from 48 to 56, **characterized in that** the stop block (61) has an inclined top stop surface (58) facing outwards to prevent the retraction ram from sliding inwards.

58. The undercarriage according to any of the foregoing claims from 48 to 57, **characterized in that** the height of the stop block (61) is between 20 mm and 150 mm, and preferably between 50 mm and 85 mm.

59. The undercarriage according to any of the foregoing claims or according to the preamble to claim 1, **characterized in that** in the respective housing (26, 28) there is a stop surface (46) inclined with respect to the corresponding surface of the housing (26, 28) at an angle of between 7° and 30°, in particular between 10° and 20° and, preferably, between 12.5° and 17.5°.

60. The undercarriage according to any of the foregoing claims or according to the preamble to claim 1, **characterized in that** on the respective beam element (36, 38) there is a stop surface (50) inclined with respect to the corresponding surface of the housing (26, 28) at an angle of between 7° and 30°, in particular between 10° and 20° and, preferably, between 12.5° and 17.5°.

61. The undercarriage according to any of the foregoing claims from 48 to 60, **characterized in that** it comprises means for fastening the stop block (61) in the socket (63).

62. The undercarriage according to claim 61, **characterized in that** the means for fastening the stop block (61) engage the rear wall (63b) of the socket (63).

63. The undercarriage according to claim 61 or 62, **characterized in that** the means for fastening the stop block (61) are in the form of screw means (65).

64. The undercarriage according to any of the foregoing claims from 61 to 63, **characterized in that** the means for fastening the stop block (61) are in the form of means that pass through holes (69) made in the stop block (61).

65. The undercarriage according to claim 63 or 64, **characterized in that** the screw means comprise a plurality of screws (65).

66. The undercarriage according to any of the foregoing claims from 63 to 65, **characterized in that** the screw means engage a threaded hole (63") made in the corresponding wall (63b) of the socket (63).

67. The undercarriage according to any of the foregoing claims from 48 to 66, **characterized in that** the stop block (61) comprises means for engaging means used to extract the stop block (61).

68. The undercarriage according to claim 67, **characterized in that** at least one respective hole (69) and, in particular, a first and a second hole made in the stop block (61) and through which the fastening means (65) pass, comprises internal threading which does not cooperate with the fastening means (65) and constitute means for engaging means used to extract the stop block (61).

69. The undercarriage according to any of the foregoing claims from 48 to 68, **characterized in that** the means for fastening the stop block (61) in its socket comprise a cover plate (71).

70. The undercarriage according to any of the foregoing claims, **characterized in that** the width of the stop means (50) on the retraction ram is the same or substantially the same as the corresponding surface of the retraction ram.

71. The undercarriage according to any of the foregoing claims, **characterized in that** the width of the stop means (46) in the housing is the same or substantially the same as the corresponding surface of the housing.

72. The undercarriage according to any of the foregoing claims, **characterized in that** the width of the engagement and sliding means (25, 27, 29, 37) is the same or substantially the same as the corresponding surface of the housing and/or retraction ram.

73. The undercarriage according to any of the foregoing claims or according to the preamble to claim 1, **characterized in that** the stop means (46, 50) are shaped in such a way that the reaction that opposes the stress applied to the respective housings (26, 28) by the beam elements (36, 38) in the extended track gauge condition is supported by a flat surface (29) at the back of the stop means in the housing (26, 28).

74. The undercarriage according to any of the foregoing claims or according to the preamble to claim 1, **characterized in that** the resultant (R') of the pressures opposing the stress applied to the respective bottom surfaces of the housings (26, 28) by the beam elements (36, 38) in the extended track gauge condition is spaced from the stop means (46) of the housing (26, 28).
